(19) Europäisches Patentamt / European Patent Office / Office européen des brevets

(11) **EP 3 008 664 B1**

(12) **FASCICULE DE BREVET EUROPEEN**

(45) Date de publication et mention
de la délivrance du brevet:
**23.10.2019 Bulletin 2019/43**

(51) Int Cl.:
***G06K 9/32*** *(2006.01)*

(21) Numéro de dépôt: **14749866.1**

(22) Date de dépôt: **10.06.2014**

(86) Numéro de dépôt international:
**PCT/FR2014/051380**

(87) Numéro de publication internationale:
**WO 2014/199061 (18.12.2014 Gazette 2014/51)**

(54) **PROCÉDÉ ET SYSTÈME DE SUIVI D'OBJETS EN MOUVEMENT**

VERFAHREN UND SYSTEM ZUR ÜBERWACHUNG VON OBJEKTEN IN BEWEGUNG

METHOD AND SYSTEM FOR MONITORING OBJECTS IN MOTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.06.2013 FR 1355320**

(43) Date de publication de la demande:
**20.04.2016 Bulletin 2016/16**

(73) Titulaire: **Renault S.A.S.**
**92100 Boulogne-Billancourt (FR)**

(72) Inventeurs:
• **LAMARD, Laeticia**
**F-78000 Versailles (FR)**
• **BOYER, Jean-Philippe**
**F-92140 Clamart (FR)**
• **CHAPUIS, Roland**
**F-63500 Issoire (FR)**

(56) Documents cités:
**US-A1- 2004 156 530    US-A1- 2005 104 962
US-A1- 2011 123 067    US-A1- 2013 051 624
US-B1- 6 542 621**

EP 3 008 664 B1

**Description**

L'invention concerne le suivi d'objets en mouvement formant des cibles, en particulier mais non exclusivement les objets se déplaçant sur une voie de circulation dont les déplacements sont suivis par un système embarqué au sein d'un véhicule automobile.

Dans les véhicules automobiles, on utilise en général des systèmes d'aide à la conduite destinés à améliorer la sécurité du conducteur. En général on utilise des systèmes qui observent l'environnement du véhicule et qui peuvent avertir d'un danger ou agir directement sur le véhicule. Pour observer l'environnement du véhicule, on utilise des dispositifs tels que des caméras ou des radars.

Dans les véhicules automobiles, on utilise également des régulateurs de vitesse qui maintienne une distance de sécurité avec le véhicule roulant devant le véhicule dont la vitesse est régulée. D'autres systèmes peuvent suivre les déplacements de piétons ou d'autres véhicules se déplaçant devant le véhicule. Comme on le conçoit, les capteurs optiques tels que des caméras ne peuvent observer que les obstacles visibles. Les informations et les décisions déduites de ces capteurs directement, c'est-à-dire sans traitement, peuvent donc pas ne pas être pertinentes.

En effet, lors de phénomènes dits d'occultation, lorsqu'un objet est caché par un autre objet, l'objet occulté qui était suivi avant son occultation par le capteur devient invisible. Dans un système de régulation de vitesse, si le véhicule qui est suivi est occulté dans un virage, par un véhicule arrivant dans une autre voie, alors le système peut considérer que le véhicule suivi a disparu et qu'il est possible d'accélérer. Aussi, dans les systèmes capables de suivre des piétons, il est nécessaire de détecter la réapparition d'un piéton qui était occulté, par exemple par un véhicule. Un piéton qui traverse une voie de circulation peut être lors de la traversée occulté par un véhicule puis réapparaître. Il est alors nécessaire de prévoir sa réapparition.

On pourra se référer au document « Dealing with occlusions with multi targets tracking algorithms for the real road context" (Lamard et al, Intelligent Vehicles Symposium (IV), 2012 IEEE), qui décrit le suivi d'objets et le traitement des occultations.

On pourra également se référer au livre intitulé « Statistical multisource-multitarget, Information fusion », de Ronald P.S. Malher qui décrit un module de suivi d'objets se déplaçant.

Cela étant, les systèmes existants de suivi des objets, même s'ils prennent en compte les phénomènes d'occultation, ne permettent pas d'obtenir un suivi satisfaisant des différents objets se déplaçant.

L'invention a donc pour but d'améliorer le suivi des objets.

Selon un aspect, il est proposé un procédé de suivi d'objets en mouvement formant des cibles, comme défini dans la revendication 1, comprenant une première étape d'observation des cibles, une deuxième étape récursive de suivi des déplacements desdites cibles, c'est-à-dire de suivi du déplacement et de la prédiction de leur déplacement, et une troisième étape dans laquelle on détermine si une cible est occultée.

Selon une caractéristique générale, le procédé comprend une étape récursive de détermination du type de cible, la deuxième étape et la troisième étape étant mises en oeuvre en prenant en considération le type de cible.

La cible est associée à une information relative à la position et à la vitesse de la cible qui peut être mémorisée, et, ici, mise à jour.

Lors de l'étape d'observation, on peut utiliser un capteur pour observer une zone dans laquelle se déplacent les objets qui forment les cibles.

Par étape récursive on entend une étape qui permet d'élaborer une ou plusieurs valeurs de sortie qui sont également prises en d'entrée lors de la prochaine mise en oeuvre de l'étape.

Ainsi l'étape récursive de suivi des déplacements des cibles permet d'actualiser le déplacement des cibles en prenant en considération le déplacement des cibles déterminé lors de la précédente mise en oeuvre de l'étape. Tel est également le cas de l'étape récursive de détermination du type de cible dans laquelle on utilise les types de cible déterminés préalablement lors de la mise en oeuvre de l'étape.

En prenant en considération le type de cible, par exemple piéton ou véhicule, on peut prédire de manière plus précise le déplacement des cibles, en particulier lors d'une occultation. En effet une cible de type piéton est moins volumineuse et se déplace à une vitesse réduite par rapport à une cible de type véhicule. Aussi, en prenant en considération le type de cible on peut plus facilement connaître le nombre de cibles qui sont suivies, contrairement aux solutions connues de l'art antérieur.

L'étape de détermination du type de cible peut comprendre une détermination de la largeur d'une cible, la troisième étape étant mise en oeuvre en prenant en considération la largeur de la cible.

En mettant en oeuvre l'étape de détermination de la visibilité d'une cible, on détermine si cette cible est occultée. De ce fait, il est particulièrement avantageux de connaître la largeur de la cible qui est occultée, en particulier par rapport aux autres cibles qui peuvent l'occulter.

La deuxième étape peut comprendre une étape détermination de l'apparition de nouvelles cibles, une étape de comparaison entre l'observation et une prédiction de l'état des cibles, et une étape de simplification de l'état des cibles, les étapes de suivi des déplacements desdites cibles étant mises en oeuvre en prenant en considération le type de cible.

Il est en effet l'avantage de connaître le type de cible pour déterminer exactement le nombre de cibles et empêcher le remplacement d'une cible d'un type par une cible d'un autre type.

La troisième étape peut comprendre une étape de construction d'une carte d'occultation prenant en considération le type de cible.

L'étape de détermination du type de cible peut comprendre une étape de mise à jour des types de cible, une étape de prédiction de type de cible, et une étape détermination de largeur de cible.

Selon un autre aspect, l'invention a pour objet un système de suivi d'objets en mouvement formant des cibles, comme défini dans la revendication 6, comprenant un premier module d'observation des cibles, un deuxième module bouclé sur lui-même configuré pour suivre les déplacements desdites cibles, et un troisième module configuré pour déterminer si une cible est occultée.

Le système comprend un module bouclé sur lui-même configuré pour déterminer le type de cible, le module configuré pour déterminer le type de cible étant en communication avec deuxième module et le troisième module.

Le module configuré pour déterminer le type de cible peut être configuré pour déterminer la largeur d'une cible et pour communiquer ladite largeur au troisième module.

Le deuxième module peut comprendre un sous-module pour déterminer si de nouvelles cibles sont apparues, un sous-module de comparaison entre les mesures issues du capteur et une prédiction de l'état des cibles, et un sous-module de simplification de l'état des cibles, les sous-modules étant en communication avec le module configuré pour déterminer le type de cible.

Le troisième module peut comprendre un sous-module de construction d'une carte d'occultation en communication avec le module configuré pour déterminer le type de cible.

Le module de détermination du type de cible peut comprendre un sous-module de mise à jour des types de cible, un sous-module de prédiction des types de cible, et un sous-module de détermination de largeur des cibles.

Selon encore un autre aspect, l'invention a pour objet un véhicule automobile, comme défini dans la revendication 11, comprenant le système de suivi.

L'invention sera mieux comprise à l'étude détaillée de quelques modes de réalisation pris à titre d'exemples non limitatifs et illustrés par les dessins annexés sur lesquels :

- les figures 1 et 2 illustrent schématiquement un phénomène d'occultation,
- la figure 3 illustre schématiquement un système de suivi de cibles selon un mode de réalisation de l'invention, et
- les figures 4 à 7 illustrent schématiquement les modules d'un système de suivi selon un mode de réalisation de l'invention.

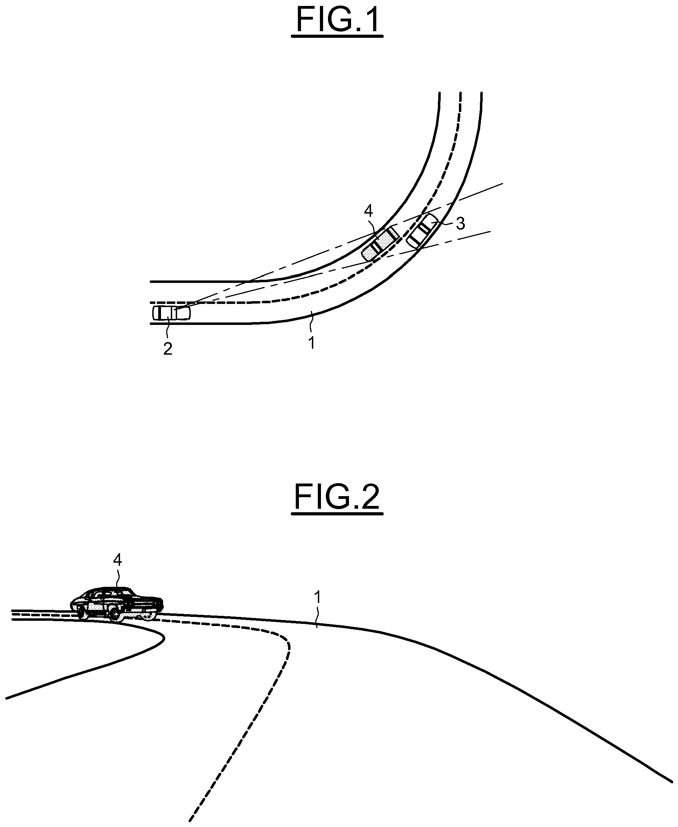

Sur la figure 1 on a représenté en vue de dessus une voie de circulation 1 sur laquelle circule une pluralité de véhicules 2, 3 et 4. Le véhicule 2 peut comprendre un système pour suivre des objets se déplaçant formant des cibles, par exemple un système selon l'invention. Le véhicule 2 peut également comprendre des moyens de régulations de vitesse qui utilisent les informations du système de suivi pour conserver une distance suffisamment grande entre deux véhicules qui se suivent. Ici, le véhicule 2 peut suivre le véhicule 3 qui est sur la même voie en vérifiant que la distance qui sépare les véhicules est suffisamment élevée.

Sur la figure 2, on a représenté une vue en perspective prise depuis le véhicule 2, par exemple une vue obtenue par un capteur utilisé pour observer des objets se déplaçant devant le véhicule. Comme on peut le constater, la courbure de la voie 1 et l'arrivée du véhicule 4 dans l'autre voie rendent impossible pour le capteur de voir le véhicule 3 qui est occulté par le véhicule 4.

En utilisant les informations obtenues préalablement, on peut déterminer que le véhicule 3 est occulté, et prévoir son déplacement pour empêcher une accélération du véhicule. Toutefois, si les objets observés ne sont pas du même type, par exemple si à la place d'un véhicule automobile 3 on suit une motocyclette, dont les dimensions sont différentes de celles d'un véhicule, alors il est nécessaire de savoir que le véhicule 3 est une motocyclette pour prédire de manière plus précise comment elle va se déplacer et réapparaitre après avoir été occultée par le véhicule. L'invention permet de déterminer le type de cible qui est suivi.

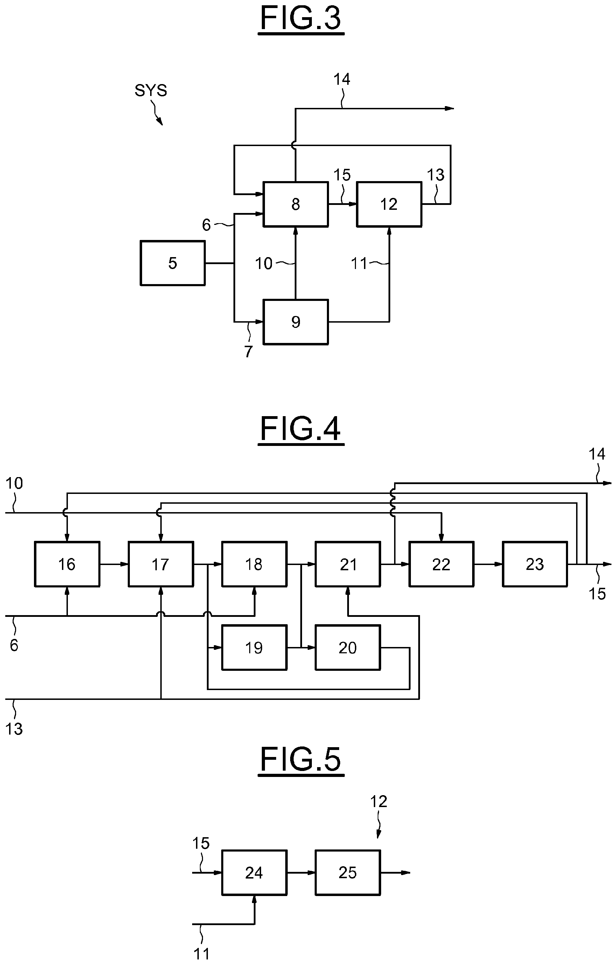

Sur la figure 3, on a représenté un système SYS de suivi de cibles selon l'invention.

Le système SYS comprend un capteur 5, par exemple une caméra ou un radar, ou, de manière générale un module d'observation des cibles, configuré pour délivrer des informations sur des objets observés directement par le capteur. Comme on le conçoit, si un objet est occulté, en sortie du capteur, aucune information n'est délivrée concernant cet objet occulté.

Le système SYS comporte encore un module 8 de suivi de déplacement configuré pour suivre les déplacements des cibles, un module 9 de détermination de type de cible configuré pour déterminer le type de cible suivi par le capteur 5 et un module 12 de détection d'occultation configuré pour déterminer si une cible est occultée.

L'entrée du module 8 est raccordée à la sortie du capteur 5 par une connexion 6. Le module 8 est également raccordé à la sortie du module 9 par une connexion 10. L'entrée du module 9 de détermination du type de cible est raccordée à la sortie du capteur 5 par une connexion 7.

La sortie du module 12 de détection d'occultation est en communication par une connexion 13 au module 8 configuré pour suivre le déplacement des cibles. Aussi, une connexion 15 permet au module 8 de suivi de déplacement de fournir de l'information au module 12 de détection d'occultation. Une autre sortie 14 du module 8 de suivi de déplacement permet d'obtenir un état des cibles corrigées, c'est-à-dire des informations relatives au type, à la position, à la vitesse et à la direction de déplacement d'une pluralité de cible, et ce même si certaines de ces cibles sont occultées. Cette sortie 14 du module 8 peut par exemple être fournie à un dispositif d'aide à la conduite, par exemple régulateurs de vitesse.

On peut noter que contrairement aux systèmes connus de l'art antérieur, on utilise ici un module de détermination de type de cible et les informations fournies par ce module permettent de déterminer de manière plus précise si une cible est occultée, notamment dans le module 12 de détection d'occultation, et permettent également de suivre plus précisément des cibles dans le module 8 de suivi de déplacement.

Sur la figure 4 on a représenté plus en détail le module 8 de suivi du déplacement des cibles. Sur cette figure on a également représenté les connexions déjà décrites en se référant à la figure 3 pour mettre en communication le module 8 de suivi du déplacement des cibles avec les autres modules du système SYS. Plus précisément, on a représenté la connexion 13 reliant la sortie du module 12 de détection d'occultation au module 8 de suivi de déplacement, la connexion 15 reliant une sortie du module 8 de suivi de déplacement au module 12 de détection d'occultation, la connexion 10 reliant la sortie du module 9 de détermination du type de cible au module 8 de suivi de déplacement et la connexion 6 reliant le capteur 5 au module 8 de suivi de déplacement.

Le module 8 de suivi de déplacement est un module bouclé sur lui-même dans lequel la sortie 15 destinée à communiquer avec le module 12 de détection d'occultation est également fournie en entrée de plusieurs sous-modules du module 8 de suivi de déplacement.

Le module 8 de suivi de déplacement comprend notamment un premier sous-module 16 de détection de nouvelles cibles configuré pour déterminer si de nouvelles cibles sont apparues, à partir notamment des mesures (c'est-à-dire les informations issues directement du capteur), du type des cibles déjà présentes, et d'une prédiction de l'état des cibles.

La sortie du sous-module 16 de détection de nouvelles cibles est fournie à un sous-module 17 de comparaison configuré pour comparer les mesures aux cibles, pour vérifier les résultats issus du sous-module 16 de détection de nouvelles cibles. Le sous-module 17 de comparaison détermine notamment s'il est probable que les cibles qui apparaissent au niveau du capteur soit de nouvelles cibles et non des objets déjà présents. Il est donc pertinent d'utiliser des informations sur le type de cible des cibles déjà présentes, ainsi que des informations sur leurs positions et leurs déplacements.

La sortie du sous-module 17 de comparaison est fournie à un sous-module 18 de mise à jour de l'état des cibles dans lequel on met à jour des informations relatives aux cibles telles que leur position ou leur vitesse par rapport à des informations obtenues lors d'une précédente mise en oeuvre du suivi, à partir notamment des mesures.

La sortie du sous-module 17 de comparaison est également fournie à un sous-module 19 de mise à jour du nombre de cible dans lequel on met à jour le nombre de cibles suivies pour ensuite prédire dans un sous-module 20 de prédiction du nombre de cible, le nombre de cibles ultérieures. En effet on peut prédire qu'une cible va disparaître et ne sera pas à suivre. La sortie du sous-module 20 de prédiction du nombre de cible est bouclée sur l'entrée du sous-module 19 de mise à jour du nombre de cibles.

Les sorties du sous-module 18 de mise à jour de l'état des cibles et du sous-module 19 de mise à jour du nombre de cibles sont également fournies à un sous module 21 de calcul de probabilité qui est configuré pour délivrer des données relatives à la probabilité d'existence des cibles, par exemple des gaussiennes bidimensionnelles.

La sortie du sous-module 21 de calcul de probabilité est fournie à un sous-module 22 de simplification de l'état des cibles qui permet par exemple d'éliminer les cibles dont la probabilité d'existence est trop faible ou par exemple de fusionner deux cibles trop proches (c'est-à-dire dont les gaussiennes sont trop proches). Cette simplification est mise en oeuvre en prenant en considération les types de cible. En effet, une cible correspondant à un piéton qui serait très proche d'une cible correspondant à un véhicule ne doit pas être fusionnée avec celle du véhicule.

Enfin le module 8 de suivi de déplacement comprend un sous-module 23 de prédiction dans lequel on prédit l'état des cibles, pour par exemple fournir au moyen de la connexion 15 des informations sur les étapes ultérieures des cibles au module 12 de détection d'occultation.

Sur la figure 5 on a représenté de manière plus détaillée le module 12 de détection d'occultation. Ce module a pour entrée les connexions 15 et 11 correspondant respectivement à une prédiction de l'État des cibles et à des informations sur le type de cible. Le module 12 de détection d'occultation comprend un sous-module 24 d'élaboration de carte d'occultation permettant d'élaborer une carte d'occultation communiquant avec un sous-module 25 de probabilité de détection destiné à élaborer des informations relatives à la probabilité de détection des cibles pour le module 8 de suivi de déplacement. Plus précisément, une probabilité de détection est associée à chaque cible dans le sous-module 25 de probabilité de détection.

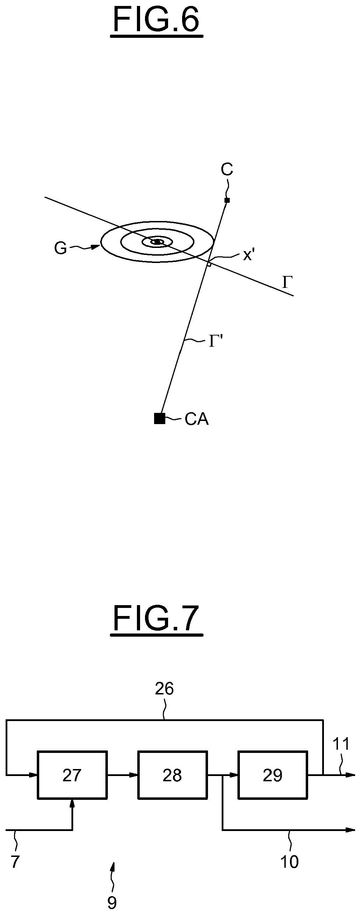

Sur la figure 6 on a représenté de manière schématique une gaussienne bidimensionnelle G associée à une cible susceptible d'occulter une autre cible placée au point C vue avec un capteur CA. Les équations présentées ci-après permettent d'obtenir la probabilité de détection d'une cible située en un point de coordonnées (x,y), ladite probabilité étant notée $Pd_{occ}(x,y)$. En notant $Pd(x,y)$ la probabilité de détection associée au capteur, $P_{\overline{occ}}(x,y)$ la probabilité qu'une cible située au point de coordonnées (x,y) ne soit pas occultée, j l'indice associé à la gaussienne G, $w_j$ la probabilité d'existence des cibles prédites, $Po_j(x,y)$ la probabilité qu'une cible soit entre le capteur CA et la cible C, on a :

$$Pd_{occ}(x,y) = Pd(x,y) \times P_{\overline{occ}}(x,y)$$

$$P_{\overline{occ}}(x,y) = \prod_j (1 - wj Po_j(x,y))$$

Sur la figure 6, on a également représenté la droite Γ' qui passe par le point C et le capteur CA, et la droite Γ orthogonale à la droite Γ' et passant par le centre de la gaussienne G. Le point x' correspond à la projection de la moyenne ou du centre de la gaussienne G sur la droite Γ'. En notant $f_G^{\Gamma}$ la projection de la gaussienne sur la droite Γ, $\sigma_U$ la largeur de la cible C, Pu la fonction représentant le pouvoir occultant de la cible en fonction de la distance du point au centre de la cible obtenue à partir de $\sigma_U$ (plus le point est proche du centre de la cible plus le pouvoir occultant de cette cible est élevé, cette fonction prend en considération la variance de hauteur de la cible), $\sigma_G$ la variance de la marginale de la gaussienne projetée sur la droite Γ et d la distance entre le centre de la gaussienne et le point x', on a :

$$Po_j(x,y) = (f_G^{\Gamma} * Pu)(x')$$

$$(f_G^{\Gamma} * Pu)(x') = \frac{\sigma_U \sqrt{2\pi}}{\sqrt{2\pi(\sigma_G^2 + \sigma_U^2)}} e^{\frac{-(d^2)}{2\sqrt{\sigma_G^2 + \sigma_U^2}}}$$

Ces deux équations permettent de remonter à la probabilité $Pd_{occ}(x,y)$, qui peut ensuite être fournie au module 25 de probabilité de détection. Ce module 25 de probabilité de détection permet d'affecter, à partir de la carte créée à partir de $Pd_{occ}(x,y)$, une probabilité de détection à chaque cible. On peut mettre en oeuvre cette affectation en choisissant la valeur de la carte au point de la moyenne de la gaussienne représentant la cible, ou en effectuant une moyenne de la probabilité de détection $Pd_{occ}(x,y)$ pondérée par la probabilité de présence de cible, en prenant en considération la variance de la fonction de densité représentant la position de la cible.

En variante, le module 12 de détection d'occultation peut fournir des résultats sous forme binaire, correspondant soit à un objet est visible, soit à un objet non visible, au lieu de fournir des probabilités. On obtient ainsi une simplification des calculs.

Sur la figure 7 on a représenté de manière plus détaillée le module 9 de détermination du type de cible. On peut constater que ce module est bouclé sur lui-même par une connexion 26, et reçoit en entrée des informations du capteur par la connexion 7. Il est fournit en sortie des informations sur le type de cible par les connexions 10 et 11.

Le module 9 de détermination du type de cible comprend un sous-module 27 de mise à jour des types de cible configurés pour effectuer une mise à jour Bayésienne de la probabilité du type de cible. Le type de cible peut correspondre à une densité de probabilité discrète décrivant le type de cible possible.

Sur une voie de circulation, le type de cible peut être par exemple inconnu, piéton, deux-roues, véhicule automobile, camion (notés ti, i variant entre 0 et 4). En notant $X_{type}$ le type d'une cible, $P_k(X_{type} = t_i)$ la probabilité à l'instant k qu'une cible soit de type ti et $P(Z_{type}|X_{type} = t_i)$ la vraisemblance de la mesure par rapport à la cible concernant le type (pouvant par exemple provenir d'une matrice de confusion liée au système de classification du capteur), on a :

$$P_k(Xt_{ype} = t_i) = \frac{P(Z_{type}|X_{type} = t_i) * P_{k-1}(Xt_{ype} = t_i)}{\sum_{j=0}^{4} P(Z_{type}|X_{type} = tj) * P_{k-1}(Xt_{ype} = tj)}$$

C'est un sous-module 28 de prédiction des types de cible, par exemple intégré au module 8 qui détermine les probabilités $P_k(X_{type} = t_i)$.

Le module 9 de détermination du type de cible comprend également un sous-module de détermination de la largeur des cibles 29 capable par exemple de fournir cette valeur de largeur au module 12 de détection d'occultation.

En notant Li la largeur typique d'un objet de type ti, la largeur d'une cible est donnée par la formule suivante :

$$\sigma_U = \sum_{i=0}^{4} P_k(X_{type} = t_i) * Li$$

On peut noter que dans l'art antérieur, les modules de suivi tels que le module 8 de suivi de déplacement utilisent une valeur de vraisemblance pour associer aux objets mesurés et vus par les capteurs des cibles. On améliore ainsi la détermination des cibles à prendre en considération. En utilisant des informations relatives au type de cible, on améliore la détermination des cibles. En notant f(Zetat|Xetat) la vraisemblance utilisée dans un module selon l'art antérieur, ici, on a une vraisemblance f(Z|X) obtenue selon les équations :

$$f(Z|X) = f_{etat}(Z_{etat}|X_{etat}) * f_{type}(Z_{type}|Xt_{ype})$$

$$f_{type}(Z_{type}|X_{type}) = \sum_{j=0}^{4} P(Z_{type}|X_{type} = tj) * P_{k-1}(X_{type} = tj)$$

Aussi, le sous-module de simplification 22 du module 8 de suivi de déplacement peut simplifier les cibles en fonction de leur distance, et ce en prenant en considération le type de cible. Cette simplification est faite en calculant la distance entre deux gaussiennes bidimensionnelles proches, et en modifiant cette distance en fonction du type de cible estimé. On pourra par exemple utiliser le calcul de distance connu par l'homme du métier sous le nom de Bhattcharyya pour calculer la distance entre deux densités de probabilités discrètes. En notant $D(X_{type}^1|X_{type}^2)$ la distance entre une cible d'indice 1 et une cible d'indice 2 en prenant en considération le type de cible, en notant $D_{etat}(X_{etat}^1|X_{etat}^2)$ la distance obtenue de manière classique sans prendre en considération le type de cible, on a :

$$D(X^1|X^2) = D_{etat}(X_{etat}^1|X_{etat}^2) + D_{type}(X_{type}^1|X_{type}^2)$$

$$D_{type}(X_{type}^1|X_{type}^2) = -\ln\left(\sum_{j=0}^{4} \sqrt{P_k(X_{type}^1 = tj)P_k(X_{type}^2 = tj)}\right)$$

Grâce à l'invention, on obtient une amélioration de la précision du suivi des objets se déplaçant formant des cibles. On obtient notamment une amélioration de la détermination du nombre de cibles, une amélioration de la détermination de la vraisemblance entre les mesures et une cible, et on peut plus facilement associer une cible à un objet vu ou mesuré par un capteur.

On améliore également la sécurité des utilisateurs de véhicules automobiles.

## Revendications

**1.** Procédé de suivi d'objets en mouvement formant des cibles, implémenté dans un véhicule en mouvement, comprenant une première étape d'observation des cibles, une deuxième étape récursive de suivi des déplacements desdites cibles, une troisième étape dans laquelle on détermine si une cible est occultée, **caractérisé en ce qu'**il comprend une étape récursive de détermination du type ($X_{type}$) de cible, de suivi du déplacement et de la prédiction de leur déplacement,
ladite étape récursive de détermination comprenant une étape de mise à jour des types de cible configurée pour effectuer une mise à jour Bayésienne d'une probabilité du type de cible à un instant (k) faisant intervenir une vraisemblance de mesure par rapport à la cible concernant chaque type (ti), et fournir en sortie de ladite étape récursive de détermination une information sur le type de cible, comprenant les probabilités de chaque type pour chaque cible,
et

la deuxième étape et la troisième étape étant mises en oeuvre en prenant en considération le type (ti) de cible, la deuxième étape permettant d'obtenir un état des cibles corrigées, correspondant à des informations relatives aux types, aux positions, aux vitesses et aux directions de déplacement d'au moins une desdites cibles même si ladite cible est occultée, ladite deuxième étape comprenant une étape de détermination de l'apparition de nouvelles cibles, une étape de comparaison entre l'observation et une prédiction de l'état des cibles, et une étape de simplification de l'état des cibles apte à fusionner deux cibles trop proches, les étapes de suivi des déplacements desdites cibles étant mises en oeuvre en prenant en considération ladite information sur le type (ti) de cible.

2. Procédé selon la revendication 1, dans lequel le type de cible correspond à une densité de probabilité discrète.

3. Procédé selon l'une quelconque des revendications 1 et 2, dans lequel l'étape de détermination du type de cible comprend une détermination de la largeur d'une cible ($\sigma_U$), la troisième étape étant mise en oeuvre en prenant en considération la largeur de la cible.

4. Procédé selon l'une quelconque des revendications 1 à 3, dans lequel la troisième étape comprend une étape de construction d'une carte d'occultation prenant en considération le type de cible.

5. Procédé selon l'une quelconque des revendications 1 à 4, dans lequel l'étape de détermination du type de cible comprend une étape de prédiction de type de cible, et une étape détermination de largeur de cible.

6. Système de suivi d'objets en mouvement formant des cibles, apte à être embarqué au sein d'un véhicule automobile, comprenant un premier module d'observation des cibles (5), un deuxième module bouclé sur lui-même configuré pour suivre et prédire les déplacements desdites cibles (8), et un troisième module configuré pour déterminer si une cible est occultée (12), **caractérisé en ce qu'**il comprend un module bouclé sur lui-même configuré pour déterminer le type de cible (9),

ledit module de détermination du type ($X_{type}$) de cible (9) comprenant un sous-module (27) de mise à jour des types de cible configuré pour effectuer une mise à jour Bayésienne d'une probabilité du type de cible à un instant (k) au moyen d'une vraisemblance de mesure par rapport à la cible concernant chaque type, et fournir en sortie dudit module de détermination du type de cible (9) une information sur le type de cible (10, 11),comprenant les probabilités de chaque type pour chaque cible,
et,

le module configuré pour déterminer ladite information sur le type de cible (9) étant en communication (10, 11) avec le deuxième (8) module et le troisième (12) module, le deuxième module (8) permettant d'obtenir un état des cibles corrigées, correspondant à des informations relatives aux types, aux positions, aux vitesses et aux directions de déplacement d'au moins une desdites cibles même si ladite cible est occultée, ledit deuxième module (8) comprenant un sous-module pour déterminer si de nouvelles cibles sont apparues (16), un sous-module (17) de comparaison entre les mesures issues du capteur et une prédiction de l'état des cibles, et un sous-module de simplification (22) de l'état des cibles apte à fusionner deux cibles trop proches, les sous-modules étant en communication avec le module (9) configuré pour déterminer le type (ti) de cible et configurés pour prendre en considération ladite information sur le type de cible.

7. Système selon la revendication 6, dans lequel le type de cible correspond à une densité de probabilité discrète.

8. Système selon l'une quelconque des revendications 6 et 7, dans lequel le module configuré pour déterminer le type de cible est configuré pour déterminer la largeur d'une cible (29) et pour communiquer ladite largeur au troisième module.

9. Système selon l'une quelconque des revendications 6 à 8, dans lequel le troisième module comprend un sous-module de construction d'une carte d'occultation (24) en communication avec le module configuré pour déterminer le type de cible.

10. Système selon l'une quelconque des revendications 6 à 9, dans lequel le module de détermination du type de cible comprend un sous-module de prédiction des types de cible (28), et un sous-module de détermination de largeur des cibles (29).

**11.** Véhicule automobile comprenant ledit système selon l'une quelconque des revendications 6 à 10.

**Patentansprüche**

**1.** Verfahren zur Verfolgung von sich bewegenden Objekten, welche Ziele bilden, das in einem sich bewegenden Fahrzeug implementiert ist und einen ersten Schritt der Beobachtung der Ziele, einen zweiten, rekursiven Schritt der Verfolgung der Verlagerung der Ziele und einen dritten Schritt, in welchem bestimmt wird, ob ein Ziel verdeckt ist, umfasst, **dadurch gekennzeichnet, dass** es einen rekursiven Schritt der Bestimmung des Zieltyps ($X_{type}$), der Verfolgung der Verlagerung und der Vorhersage ihrer Verlagerung umfasst,
wobei der rekursive Schritt der Bestimmung einen Schritt der Aktualisierung der Zieltypen umfasst, der dafür ausgelegt ist, eine Bayessche Aktualisierung einer Wahrscheinlichkeit des Zieltyps zu einem Zeitpunkt (k) auszuführen, bei der für jeden Typ (ti) eine Plausibilität des Messwerts, wenn das Ziel von diesem Typ ist, betrachtet wird, und am Ausgang des rekursiven Schrittes der Bestimmung eine Information über den Zieltyp zu liefern, welche die Wahrscheinlichkeiten jedes Typs für jedes Ziel umfasst, und
wobei der zweite Schritt und der dritte Schritt unter Berücksichtigung des Zieltyps (ti) durchgeführt werden, wobei der zweite Schritt ermöglicht, einen Zustand der korrigierten Ziele zu erhalten, der Informationen in Bezug auf die Typen, auf die Positionen, auf die Geschwindigkeiten und auf die Verlagerungsrichtungen wenigstens eines der Ziele, sogar wenn dieses Ziel verdeckt ist, entspricht, wobei der zweite Schritt einen Schritt der Bestimmung des Erscheinens neuer Ziele, einen Schritt des Vergleichs zwischen der Beobachtung und einer Vorhersage des Zustands der Ziele und einen Schritt der Vereinfachung des Zustands der Ziele, der geeignet ist, zwei Ziele, die einander zu nahe sind, zu vereinigen, umfasst, wobei die Schritte der Verfolgung der Verlagerungen der Ziele unter Berücksichtigung der Information über den Zieltyp (ti) durchgeführt werden.

**2.** Verfahren nach Anspruch 1, wobei der Zieltyp einer diskreten Wahrscheinlichkeitsverteilung entspricht.

**3.** Verfahren nach einem der Ansprüche 1 und 2, wobei der Schritt der Bestimmung des Zieltyps eine Bestimmung der Breite eines Ziels ($\sigma_U$) umfasst, wobei der dritte unter Berücksichtigung der Breite des Ziels durchgeführt wird.

**4.** Verfahren nach einem der Ansprüche 1 bis 3, wobei der dritte Schritt einen Schritt der Erstellung einer Verdeckungskarte unter Berücksichtigung des Zieltyps umfasst.

**5.** Verfahren nach einem der Ansprüche 1 bis 4, wobei der Schritt der Bestimmung des Zieltyps einen Schritt der Vorhersage des Zieltyps und einen Schritt der Bestimmung der Breite des Ziels umfasst.

**6.** System zur Verfolgung von sich bewegenden Objekten, welche Ziele bilden, das geeignet ist, an Bord eines Kraftfahrzeugs mitgeführt zu werden, und ein erstes Modul zur Beobachtung der Ziele (5), ein zweites, in einer Schleife zu sich selbst zurückgeführtes Modul, das dafür ausgelegt ist, die Verlagerungen der Ziele zu verfolgen und vorherzusagen (8), und ein drittes Modul, das dafür ausgelegt ist zu bestimmen, ob ein Ziel verdeckt ist (12), umfasst, **dadurch gekennzeichnet, dass** es ein in einer Schleife zu sich selbst zurückgeführtes Modul umfasst, das dafür ausgelegt ist, den Zieltyp zu bestimmen (9),
wobei das Modul (9) zur Bestimmung des Zieltyps ($X_{type}$) ein Untermodul (27) zur Aktualisierung der Zieltypen umfasst, das dafür ausgelegt ist, eine Bayessche Aktualisierung einer Wahrscheinlichkeit des Zieltyps zu einem Zeitpunkt (k) mittels einer für jeden Typ betrachteten Plausibilität des Messwerts, wenn das Ziel von diesem Typ ist, auszuführen und am Ausgang des Moduls zur Bestimmung des Zieltyps (9) eine Information über den Zieltyp zu liefern (10, 11), welche die Wahrscheinlichkeiten jedes Typs für jedes Ziel umfasst, und
wobei das Modul dafür ausgelegt ist, die Information über den Zieltyp zu bestimmen (9), indem es mit dem zweiten (8) Modul und dem dritten (12) Modul in Verbindung steht (10, 11), wobei das zweite Modul (8) ermöglicht, einen Zustand der korrigierten Ziele zu erhalten, der Informationen in Bezug auf die Typen, auf die Positionen, auf die Geschwindigkeiten und auf die Verlagerungsrichtungen wenigstens eines der Ziele, sogar wenn dieses Ziel verdeckt ist, entspricht, wobei das zweite Modul (8) ein Untermodul zum Bestimmen, ob neue Ziele erschienen sind (16), ein Untermodul (17) zum Vergleich zwischen den von dem Sensor stammenden Messwerten und einer Vorhersage des Zustands der Ziele und ein Untermodul zur Vereinfachung (22) des Zustands der Ziele, das geeignet ist, zwei Ziele, die einander zu nahe sind, zu vereinigen, umfasst, wobei die Untermodule mit dem Modul (9) in Verbindung stehen, das dafür ausgelegt ist, den Zieltyp (ti) zu bestimmen, und dafür ausgelegt sind, die Information über den Zieltyp zu berücksichtigen.

**7.** System nach Anspruch 6, wobei der Zieltyp einer diskreten Wahrscheinlichkeitsverteilung entspricht.

8. System nach einem der Ansprüche 6 und 7, wobei das Modul, das dafür ausgelegt ist, den Zieltyp zu bestimmen, dafür ausgelegt ist, die Breite eines Ziels zu bestimmen (29) und diese Breite an das dritte Modul zu übermitteln.

9. System nach einem der Ansprüche 6 bis 8, wobei das dritte Modul ein Teilmodul zur Erstellung einer Verdeckungskarte (24) umfasst, das mit dem Modul in Verbindung steht, das dafür ausgelegt ist, den Zieltyp zu bestimmen.

10. System nach einem der Ansprüche 6 bis 9, wobei das Modul zur Bestimmung des Zieltyps ein Teilmodul zur Vorhersage der Zieltypen (28) und ein Teilmodul zur Bestimmung der Breite der Ziele (29) umfasst.

11. Kraftfahrzeug, welches das System nach einem der Ansprüche 6 bis 10 umfasst.

**Claims**

1. Method for tracking objects in motion forming targets, implemented in a vehicle in motion, comprising a first step of observation of the targets, a second, recursive step of tracking of the movements of said targets, a third step in which a determination is made as to whether a target is concealed, **characterized in that** it comprises a recursive step of determination of type ($X_{type}$) of target, of tracking of the movement and of prediction of their movement, said recursive determination step comprising a step of updating of the types of target configured to perform a Bayesian updating of a probability of the type of target at an instant (k) involving a likelihood of measurement with respect to the target concerning each type (ti), and to supply as output of said recursive determination step an item of information on the type of target, comprising a probabilities of each type for each target, and the second step and the third step being implemented by taking into consideration the type (ti) of target, the second step making it possible to obtain a state of the corrected targets, corresponding to information relating to the types, to the positions, to the speeds and to the directions of movement of at least one of said targets even if said target is concealed, said second step comprising a step of determination of the appearance of new targets, a step of comparison between the observation and a prediction of the state of the targets, and a step of simplification of the state of the targets capable of merging two targets that are too close, the steps of tracking of the movements of said targets being implemented by taking into consideration said item of information on the type (ti) of target.

2. Method according to Claim 1, wherein the type of target corresponds to a discrete probability density.

3. Method according to either one of Claims 1 and 2, wherein the step of determination of the type of target comprises a determination of the width of a target ($\sigma_U$), the third step being implemented by taking into consideration the width of the target.

4. Method according to any one of Claims 1 to 3, wherein the third step comprises a step of construction of a concealment map, taking into consideration the type of target.

5. Method according to any one of Claims 1 to 4, wherein the step of determination of the type of target comprises a step of prediction of the type of target, and a step of determination of target width.

6. System for tracking objects in motion forming targets, capable of being embedded in a motor vehicle, comprising a first target observation module (5), a second module looped on itself configured to track and predict the movements of said targets (8), and a third module configured to determine whether a target is concealed (12), **characterized in that** it comprises a module looped on itself configured to determine the type of target (9), said module for determining the type ($X_{type}$) of target (9) comprising a submodule (27) for updating the types of target configured to perform a Bayesian updating of a probability of the type of target at an instant (k) by means of a likelihood of measurement with respect to the target concerning each type, and to supply as output of said module for determining the type of target (9) an item of information on the type of target (10, 11), comprising the probabilities of each type for each target, and, the module configured to determine said item of information on the type of target (9) being in communication (10, 11) with the second module (8) and the third module (12), the second module (8) making it possible to obtain a state of the corrected targets, corresponding to information relating to the types, to the positions, to the speeds and to the directions of movement of at least one of said targets even if said target is concealed, said second module (8) comprising a submodule for determining whether new targets have appeared (16), a submodule (17) for comparison between the measurements from the sensor and a prediction of the state of the targets, and a submodule (22) for the simplification of the state of the targets capable of merging two targets that are too close, the submodules being in communication with the module (9) configured to determine the type (ti) of target and being configured to take into consideration said item of information on the type of target.

7. System according to Claim 6, wherein the type of target corresponds to a discrete probability density.

8. System according to either one of Claims 6 and 7, wherein the module configured to determine the type of target is configured to determine the width of a target (29) and to communicate said width to the third module.

9. System according to any one of Claims 6 to 8, wherein the third module comprises a submodule for the construction of a concealment map (24) in communication with the module configured to determine the type of target.

10. System according to any one of Claims 6 to 9, wherein the module for determining the type of target comprises a submodule for predicting the target types (28), and a submodule for determining the width of the targets (29).

11. Motor vehicle comprising said system according to any one of Claims 6 to 10.

# FIG.1

# FIG.2

# FIG.3

SYS

# FIG.4

# FIG.5

# FIG.6

# FIG.7

## RÉFÉRENCES CITÉES DANS LA DESCRIPTION

**Littérature non-brevet citée dans la description**

- Dealing with occlusions with multi targets tracking algorithms for the real road context. **LAMARD et al.** Intelligent Vehicles Symposium (IV). IEEE, 2012

- **RONALD P.S. MALHER.** *Statistical multi-source-multitarget, Information fusion*